# EUROPÄISCHE PATENTSCHRIFT

(11) **EP 2 338 663 B1**
(45) Veröffentlichungstag und Bekanntmachung des Hinweises auf die Patenterteilung: **15.05.2019**
(21) Anmeldenummer: 10015500.1
(22) Anmeldetag: 10.12.2010
(51) Int. Cl.: B29C 48/03, B29C 48/90, B29C 48/12, B29C 53/08, B60J 10/15, B60J 10/74

(54) **Verfahren zur Herstellung eines Dichtungsstrangs**
Method for manufacturing a sealing thread
Procédé de fabrication d'un joint

(30) Priorität: 23.12.2009 DE 102009060161
(43) Veröffentlichungstag der Anmeldung: 29.06.2011
(73) Patentinhaber: CQLT SaarGummi Technologies S.à.r.l., 5544 Remich (LU)
(72) Erfinder: Kast, Christian, 66663 Merzig (DE)
(74) Vertreter: Bernhardt, Reinhold

(56) Entgegenhaltungen:
- EP-A2- 0 347 200
- DE-A1-102005 012 685
- DE-B- 1 107 926
- JP-A- 2004 299 259
- US-A- 5 424 023
- US-A1- 2004 265 414

## Beschreibung

Die Erfindung betrifft ein Verfahren zur Herstellung eines Dichtungsstrangs für die Abdichtung eines Spalts an einer Fahrzeugkarosserie, bei dem der Dichtungsstrang extrudiert und mit einer an den Spaltverlauf zumindest angenäherten Biegung vorgefertigt wird.

Extrudierte, im Fahrzeugbau eingesetzte Dichtungsstränge werden herkömmlich in gerader Form vorgefertigt und erst beim Einbau an einen gegebenenfalls gebogenen Verlauf des abzudichtenden Karosseriespalts angepasst. Die nachträgliche Biegung des in gerader Form extrudierten Strangs kann zu unerwünschten Faltenbildungen führen.
Durch Benutzung sind in gebogener Form vorgefertigte Dichtungsstränge bekannt, die als gerade Stränge extrudiert und anschließend verformt werden, wobei eine permanente Biegung durch eine plastisch verformte Verstärkungseinlage aus Metall aufrechterhalten wird. Das Problem der Faltenbildung besteht auch bei diesen Strängen.

Verfahren der eingangs genannten Art gehen aus DE 10 2005 012 685 A1, JP 2004 299259 A, US 2004/265414 A1, US 5 424 023 A sowie der EP 0 347 200 A2 hervor. Gemäß DE 10 2005 012 685 A1 werden unterschiedlich schrumpfende Materialien extrudiert, was zu einer gewünschten Krümmung des Dichtungsstrangs nach der Extrusion führt. Die JP 2004 299259 A, die US 2004/265414 A1 und die US 5 424 023 A beschreiben Verfahren, bei denen extrudierte Dichtungsstränge nachträglich gebogen werden. Aus EP 0 347 200 A2 und DE 11 07 926 B gehen Verfahren hervor, bei denen ein Dichtungsstrang von vornherein im Zuge der Extrusion gebogen extrudiert
wird, indem eine ungleichmäßige Geschwindigkeitsverteilung des die Extrusionsöffnung durchströmenden Materials erzeugt wird.

Gegenüber diesem Stand der Technik wird durch die vorliegende Erfindung ein Verfahren der eingangs erwähnten Art geschaffen, das dadurch gekennzeichnet ist, dass der Dichtungsstrang aus einem thermoplastischen Elastomer (TPE) hergestellt und sowohl als bereits gebogener Strang extrudiert als auch unmittelbar im Anschluss an die Extrusion unter plastischer Verformung und Abkühlung des extrudierten Materials gebogen wird, wobei der Öffnung des Extrusionswerkzeugs nachgeschaltete, entsprechend der gewünschten Biegung angeordnete Kalibrierelemente verwendet werden.

Vorteilhaft lässt sich der in solcher Weise gefertigte Dichtungsstrang, der mehr oder weniger genau an den Verlauf des abzudichtenden Spalts angepasst ist, spannungs- und faltenarm am Einbauort verlegen.

Die Extrusion des Dichtungsstrangs in bereits gebogener Form durch über den Querschnitt der Öffnung des Extrusionswerkzeugs ungleichmäßige Materialzufuhr wird erreicht, indem sich dadurch verteilt über den Öffnungsquerschnitt unterschiedliche Geschwindigkeiten der Materialströmung ergeben.

Der durch die Kalibrierelemente nachbearbeitete Strang wird entsprechend der Anordnung der Kalibrierelemente gebogen und z.B. in einem die Kalibrierelemente aufnehmenden Wasserbad unter "Einfrierung" des gebogenen Zustands abgekühlt.

Bei dem nach dem erfindungsgemäßen Verfahren hergestellten Dichtungsstrang handelt es sich erfindungsgemäß um einen ein Fenster einer Fahrzeugtür abdichtenden und führenden Dichtungsstrang.

Die Erfindung wird nachfolgend anhand eines Ausführungsbeispiels und der beiliegenden, sich auf dieses Ausführungsbeispiel beziehenden Zeichnungen weiter erläutert. Es zeigen:

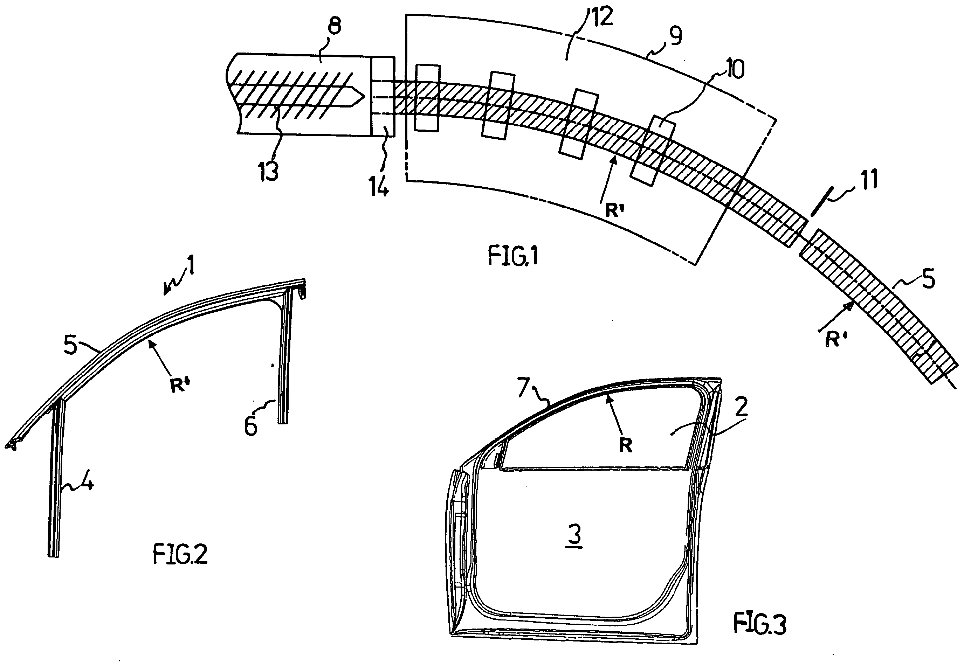

- Fig. 1: eine Vorrichtung zur Durchführung des erfindungsgemäßen Verfahrens,
- Fig. 2: eine Dichtung mit einem nach dem erfindungsgemäßen Verfahren hergestellten Dichtungsstrang, und
- Fig. 3: eine die Verwendung des Dichtungsstrangs von Fig. 2 erläuternde Darstellung.

Eine Dichtung 1 dient zur Abdichtung und Führung einer Fensterscheibe 2 in einer Fahrzeugtür 3.

Die Dichtung 1 ist aus mehreren, miteinander verbundenen Dichtungsstrangabschnitten 4 bis 6 zusammengesetzt. Die Dichtungsstrangabschnitte 4 und 6 sind gerade. Der Dichtungsstrangabschnitt 4 ist unter Annäherung an den (nicht konstanten) Radius R eines oberen Abschnitts 7 einer Einfassung der Fensterscheibe 2 gebogen und weist einen Biegeradius R' auf.

Die Dichtungsstrangabschnitte 4 bis 6 bestehen aus einem thermoplastischen Elastomer. Zumindest in den Strangabschnitt 5 ist zusätzlich eine elastische Versteifungen aus Metall oder Kunststoff eingebettet (nicht gezeigt).

Zur Herstellung gebogener Dichtungsstrangabschnitte 5 wird eine Extrusionseinrichtung 8 mit einer Materialfördereinrichtung 13 und einem Extrusionswerkzeug 14 verwendet, der eine Kalibriereinrichtung 9 nachgeschaltet ist, die in dem gezeigten Ausführungsbeispiel vier aufeinander folgende, in einem Wasserbad 12 angeordnete Kalibrierelemente 10 umfasst. Die gekühlten Kalibrierelemente 10 sind entsprechend dem Biegeradius R' angeordnet. Zur Abtrennung je eines Dichtungsstrangabschnitts 5 mit dem Biegeradius R' dient eine Schneideinrichtung 11.

Die Materialförderung innerhalb der Extrusionseinrichtung 8 kann über den Querschnitt der Öffnung des Extrusionswerkzeugs 14 derart ungleichmäßig verteilt erfolgen, dass der Strang die Öffnung bereits in gebogener Form verlässt. Zusätzlich sorgen die entsprechend dem Biegeradius R' angeordneten Kalibrierelemente 10 der Kalibriereinrichtung 9 für eine Verbiegung des Strangs. Indem das bei der Extrusion erhitzte, noch weiche thermoplastische Elastomermaterial durch die Kalibriereinrichtung 9 zunehmend abgekühlt wird und ganz oder wenigstens teilweise erstarrt, weisen durch die Schneideinrichtung 11 abgetrennte Dichtungsstrangabschnitte 5 eine permanente Biegung mit dem Radius R' auf.

## Patentansprüche

1. Verfahren zur Herstellung eines Dichtungsstrangs (5) für die Abdichtung und Führung einer Fensterscheibe (2) einer Fahrzeugtür (3) vorgesehener Dichtungsstrang hergestellt wird, bei dem der Dichtungsstrang extrudiert und mit einer an den Spaltverlauf zumindest angenäherten Biegung vorgefertigt wird,
**dadurch gekennzeichnet,**
**dass** der Dichtungsstrang (5) aus einem thermoplastischen Elastomer (TPE) hergestellt und sowohl als bereits gebogener Strang extrudiert als auch unmittelbar im Anschluss an die Extrusion unter plastischer Verformung und Abkühlung des extrudierten Materials gebogen wird, wobei der Öffnung des Extrusionswerkzeugs (14) nachgeschaltete, entsprechend der gewünschten Biegung angeordnete Kalibrierelemente (10) verwendet werden.

2. Verfahren nach Anspruch 1,
**dadurch gekennzeichnet,**
**dass** die Extrusion als bereits gebogener Strang durch eine in Bezug auf den Querschnitt der Öffnung des Extrusionswerkzeugs (14) ungleichmäßige Materialzufuhr, wobei sich verteilt über den Öffnungsquerschnitt unterschiedliche Geschwindigkeiten der Materialströmung ergeben, erfolgt.

## Claims

1. Method for producing a sealing strand (5) provided for the sealing and guidance of a window pane (2) of a vehicle door (3), in which method the sealing strand is extruded and prefabricated with a bending at least approximating to the gap profile,
**characterized**
**in that** the sealing strand (5) is produced from a thermoplastic elastomer (TPE) and is both extruded as an already bent strand and is bent directly subsequent to the extrusion with plastic deformation and cooling of the extruded material, wherein calibrating elements (10) which are downstream of the opening of the extrusion die (14) and which are arranged so as to correspond to the desired bending are used.

2. Method according to Claim 1,
**characterized**
**in that** the extrusion as an already bent strand occurs by a material feed which is non-uniform with respect to the cross section of the opening of the extrusion die (14), wherein different speeds of the material flow result in a distributed manner over the opening cross section.

## Revendications

1. Procédé pour la fabrication d'un profilé d'étanchéité (5) pour fermer de manière étanche et guider une vitre (2) d'une portière de véhicule (3), dans lequel le profilé d'étanchéité est extrudé et préfabriqué avec une courbure qui se rapprochant au moins approximativement du profil de la fente, **caractérisé en ce que** le profilé d'étanchéité (5) est fabriqué à partir d'un élastomère thermoplastique (TPE) et est tant extrudé sous forme de profilé déjà courbé que courbé immédiatement après l'extrusion avec une déformation plastique et un refroidissement de la matière extrudée, des éléments de calibrage (10) disposés en aval de l'ouverture de l'outil d'extrusion (14), agencés en fonction de la courbure souhaitée, étant utilisés.

2. Procédé selon la revendication 1, **caractérisé en ce que** l'extrusion en tant que profilé déjà courbé est effectuée par une alimentation en matière irrégulière par rapport à la section transversale de l'ouverture de l'outil d'extrusion (14), des vitesses différentes de l'écoulement de la matière, réparties sur la section transversale de l'ouverture, étant ainsi obtenues.
